# EUROPÄISCHE PATENTANMELDUNG

(11) **EP 4 296 244 A1**
(43) Veröffentlichungstag der Anmeldung: **27.12.2023**
(21) Anmeldenummer: 23172635.7
(22) Anmeldetag: 10.05.2023
(51) Int. Cl.: C03C 15/00, C03C 23/00, C03C 17/06, C03C 17/22, C03C 17/23

(54) **SUBSTRATTRÄGER AUS GLAS ZUR BEARBEITUNG EINES SUBSTRATS UND EIN VERFAHREN ZU DESSEN HERSTELLUNG**

(30) Priorität: 21.06.2022 DE 102022115457; 21.06.2022 DE 102023110225
(71) Anmelder: LPKF Laser & Electronics SE, 30827 Garbsen (DE)
(72) Erfinder: Dunker, Daniel, 30419 Hannover (DE); Dörge, Moritz, 31311 Uetze (DE); Ostholt, Roman, 30855 Langenhagen (DE); Ambosius, Norbert, 30827 Berenbostel Stadt Garbsen (DE)
(74) Vertreter: Scheffler, Jörg

(57) **Zusammenfassung**

Die Erfindung betrifft einen Substratträger (1) aus Glas zur Bearbeitung eines Substrats (2) mit einer ersten als Substratauflage (4) dienenden Oberseite und einer dieser abgewandten Unterseite, wobei die Substratauflage (4) eine Strukturierung aufweist. In einem ersten Schritt werden Modifikationen zur Erzeugung von Durchgangsöffnungen (8) und im zweiten Schritt Modifikation für Vertiefungen (9) erzeugt, die eine wesentlich schwächere Ausprägung besitzen. Nach der Modifizierung wird das plattenförmige Material des Substratträgers (1) durch nass-chemische Behandlung in seiner Dicke reduziert und dadurch alle konischen Vertiefungen (9) erweitert, sodass die Kegelformen ineinander wachsen. Durch die Kombination aus Durchgangsöffnungen (8) und einer Vielzahl konischer Vertiefungen (9) wird eine großflächige Verteilung des an einer Absaugöffnung (12) anliegenden Unterdrucks auf das Substrat (2) ermöglicht.

## Beschreibung

Die Erfindung betrifft einen Substratträger aus Glas zur Bearbeitung eines Substrats mit einer ersten als Substratauflage dienenden Oberseite und einer dieser abgewandten Unterseite, wobei die Substratauflage und/oder die Unterseite des Substratträgers eine Strukturierung aufweist. Weiterhin betrifft die Erfindung ein Verfahren zur Herstellung des Substratträgers durch Einbringen von Modifikationen und anschließende Einwirkung eines ätzenden Mediums, wodurch konische Ausnehmungen erzeugt werden.

Ein Verfahren zur Präzisionsbearbeitung von Glas mittels laserinduziertem Tiefenätzen ist unter der Bezeichnung LIDE (Laser Induced Deep Etching) für die Erzeugung von tiefen Strukturen, wie Durchgangslöchern oder Mikroschnitten bekannt geworden. Die LIDE-Technologie ermöglicht es erstmals, mit einzelnen Laserpulsen Modifikationen über die gesamte Glasdicke zu realisieren.

Bei dem beispielsweise aus der WO 2014 / 161 534 A2 bekannten Tiefenätzen wird ein transparentes Material, beispielsweise eine Glasplatte, mittels eines Laserpulses oder einer Pulsfolge über einen länglichen Bereich entlang der Strahlachse, häufig über die gesamte Dicke des transparenten Materials, modifiziert und dieses anschließend in einem nass-chemischen Ätzbad anisotrop geätzt.

Aus der WO 2016 / 041 544 A1 ist ein Verfahren zum Einbringen einer Ausnehmung in ein plattenförmiges Glassubstrat mittels Laserstrahlung bekannt, wobei es aufgrund der Einwirkung eines ätzenden Mediums durch sukzessives Aufätzen zu einem anisotropen Materialabtrag in den modifizierten Bereichen des Glassubstrats kommt.

Aufgabe der vorliegenden Erfindung ist die Herstellung eines Substratträgers aus Glas zur Bearbeitung eines Substrats mittels Laserbearbeitung mit dicht-strukturierter Oberfläche und einer teilweisen Durchlässigkeit des Materials für Unterdruck.

Als vorbereitende Maßnahmen werden beispielsweise durch mehrere verschiedene Fokussierungen unterschiedlichen Modifikationen in das zu verwendende Material eingebracht. Im ersten Schritt werden die idealen Fokus- und Leistungseinstellungen zur Erzeugung von Durchbrechungen, den sogenannten Through Glass Vias (TGV), bestimmt und eingestellt. Im zweiten Schritt wird eine als Typ-I bezeichnete Modifikation erzeugt, die eine wesentlich schwächere Ausprägung besitzt und typischerweise etwa mit der Hälfte der Leistung für TGVs erzeugt werden kann.

Zu beachten ist bei der Wahl der Einstellungen, dass die resultierenden kegelförmigen Ausnehmungen auf der Ober- und der Unterseite nach einem späteren Ätzvorgang die gleiche Größe aufweisen.

Bei einer Größe von 50 µm sind Abweichungen von bis zu 4 µm zwischen Ober- und Unterseite akzeptabel.

Im Anschluss werden große Panele der Größe 300 x 300 mm² (vorzugsweise 500 µm Material) mit einem spezifischen Muster versehen, wobei Modifikationen mit niedriger Leistung für konische bzw. kegelförmige Ausnehmungen und Modifikationen mit höherer Leistung für Durchbrechungen des Substratträgers erzeugende TGV dienen. Der pitch dieser Modifikationen beträgt 50 µm, welche in hexagonaler Anordnung vorliegen. Somit beträgt der Abstand der sog. "Dice-Lines" 45 µm. Eine vollständige Projektdatei für diese Anwendung ist vorhanden und wird stets auf ein großes Panel der Größe 300 x 300 mm² angewendet.

Ein auf solche Weise hergestellter Rohling kann vorab produziert und anschließend auf Lager gelegt werden. Diese Rohlinge sollten gesondert gelagert und markiert werden, um eine Verwechslung mit anderen Materialien auszuschließen.

Zur Herstellung des Substratträgers wird ein solcher Rohling verwendet. Entsprechend den jeweiligen Vorgaben erfolgt zunächst eine Modifizierung der Außenkantengeometrie durch die Vorrichtung entsprechend bestehender Prozessparameter für TGVs und der verwendeten Materialstärke des plattenförmigen Materials für den Substratträger.

Nach der Modifizierung wird das plattenförmige Material durch nass-chemische Behandlung um 10 % seiner Dicke reduziert. Für 500 µm Material bedeutet dies eine Reduktion auf 450 µm (Typische Prozessdauer: 50 Minuten). In diesem Zustand kann die finale Kontur aus dem 300 x 300 mm² Panel herausgetrennt werden. Das Muster mit finaler Außenkontur wird im Anschluss um weitere 10 % seiner Dicke reduziert.

In diesem Zustand sind alle konischen Ausnehmungen groß genug geätzt, dass die Kegelformen ineinander gewachsen sind und keine geraden, bei der Bearbeitung des Substrats mittels der elektromagnetischen Strahlung noch reflexionsfähigen Oberflächen mehr vorhanden sind.

Durch eine Kamera lässt sich bei einem geeigneten Muster des Substratträgers nur noch eine schwarze Fläche detektieren. Sollten noch helle Bereiche durch die Kamera sichtbar sein, die durch glatte Glasoberflächen auftreten, muss der Ätzvorgang fortgesetzt werden bis die Ausnehmungen groß genug geätzt worden sind.

Für jedes Material und jede Materialstärke müssen die Laser-Prozessparameter individuell bestimmt werden. Identische Materialien zeigen gleiche Taper-Eigenschaften auf. Daraus ergibt sich die Konsequenz, dass die Gesamtprozesszeit der nass-chemischen Behandlung identisch bleibt, sich jedoch die Aufteilung zwischen mehreren nass-chemischen Prozessschritten ändern kann.

Für alternative Materialien ändert sich ebenfalls die Gesamtprozesszeit des nass-chemischen Prozesses. Dabei sind sowohl die unterschiedlichen Ätzraten als auch die Unterschiede im Taperwinkel zu berücksichtigen. Die Gesamtprozesszeit richtet sich dabei stets nach der benötigten Zeit bis alle Typ-I Modifikationen ineinander "gewachsen" sind und die Oberfläche keine ebenen Flächen mehr enthält. Der Anteil des ersten nass-chemischen Prozessschritts hingegen ist von der Prozesszeit abhängig, die benötigt wird, um ein Durchgangsloch (TGV) zu erzielen.

Durch das Definieren von Aussenschnittkanten, lassen sich beliebige Passformen für Auflageflächen unter einer Größe von 300 x 300 mm² realisieren.

Wesentliche Vorteile des erfindungsgemäßen Substratträgers sind eine minimale Kontaktfläche zwischen dem Substratträger und dem zu bearbeitendem Substrat. Der das Substrat während der Bearbeitung fixierende Unterdruck kann durch den Substratträger auf das zu bearbeitende Substrat wirken.

Dabei sorgt die spezielle Form des Substratträgers für eine zweckmäßige großflächige Verteilung des Unterdrucks auf das Substrat. Dies wird durch die Kombination aus Durchgangsöffnungen durch den Substratträger zwischen der Substratauflage und der Unterseite und mehrere konische Ausnehmungen als kegelförmige Vertiefungen ermöglicht. Die ineinander übergehenden kegelförmigen Vertiefungen erzeugen ein Volumen unterhalb des aufgebrachten Substrats, welches den Unterdruck verteilen kann.

Die durchgängig angewinkelte Form der Substratauflage erhöht deren Resistenz gegenüber der elektromagnetischen Strahlung bei der Bearbeitung des Substrats. Eine Einkopplung der Strahlung ist dadurch erschwert und die Haltbarkeit des Substratträgers unter Einwirkung der Strahlung erhöht. Ablationen an dem Substratträger durch die Strahlung werden verhindert. Die hohen Winkel der Oberfläche der Substratauflage gewährleisten eine Totalreflexion des Laserlichts. Ein Rückreflex des Laserlichts wird durch Streuung an dem Substratträger verhindert.

Vorzugsweise hat die mikrostrukturierte Oberfläche der Substratauflage zur Bearbeitung von Substraten aus einem für die elektromagnetische Strahlung transparenten Material konische oder kegelförmige Ausnehmungen mit einem Durchmesser von 5-150 µm, mit einem Abstand p<0,95xD, insbesondere p<0,89xD, sodass das zu bearbeitende Material insbesondere im Bereich der Laserbearbeitung, auf einer Fläche <1% der Substratfläche auf der Substratauflage aufliegt, wobei die Strukturierung auf bestimmte Bereiche der Substratauflage beschränkt sein können.

Bei einer weiteren vorteilhaften Ausgestaltungsform der Erfindung dient eine leitfähige Beschichtung, beispielsweise ITO, DLC, AZO, CNT (Carbon nano tube) oder eine leitfähige Metallbeschichtung wie insbesondere Cr, Ti, Mo, Au, Al auf der Ober und/oder Unterseite, zur Ableitung einer statischen Aufladung.

Vorteilhaft wirken sich bei der Beschichtung absorbierende, reflektierende und/oder transparente Eigenschaften aus, wobei die Schichtdicke vorzugsweise kleiner als 5 µm, insbesondere kleiner als 3 µm oder 1 µm ist.

Eine besonders bevorzugte Anwendung des Substratträgers aus Glas ergibt sich bei Verfahren zur Laserbearbeitung des Substrats, wobei das zu bearbeitende, insbesondere transparente Substrat während der Bearbeitung mit einer mittleren Laserleistung kleiner als 500 W und/oder einer Pulsenergie kleiner als 500 µJ mit dem Substratträger in Kontakt steht.

Durch die Strukturierung eignet sich der Substratträger bevorzugt auch zur Fixierung von sehr dünnen Substraten mit einer Materialstärke kleiner als 100 µm, insbesondere kleiner als 50 µm oder 25 µm.

Bei der Bearbeitung eines transparenten oder transmissiven Substrats mittels elektromagnetischer Strahlung gelangt die Strahlung durch das Substrat in die Substratauflage, wobei eine absorbierende Substratauflage stark erwärmt oder abgetragen wird und zudem auch unerwünschte Auswirkungen auf Substrat auftreten.

Um diesem Problem entgegenzutreten, hat der erfindungsgemäße Substratträger aus Glas eine mikrostrukturierte Oberfläche als Substratauflage. Dadurch erfolgt eine Streuung der Strahlung an der mikrostrukturierten Oberfläche, wobei eine Absorption weitgehend vermieden wird. Zugleich wird dadurch eine Minimierung der Auflageflächen durch einen Punktkontakt mit dem Substrat erreicht.

Die Durchgangsöffnung dienen dabei der Unterdruckfixierung, wobei gemäß einer besonders praxisgerechten Ausgestaltung beidseitige Strukturierungen für eine gleichmäßige Verteilung des Unterdrucks sorgen und auf eine exakte Positionierung gegenüber einem Anschluss einer Unterdruckquelle verzichtet werden kann.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung in
- Fig. 1: eine Seitenansicht eines Substratträgers mit einseitigen Ausnehmungen;
- Fig. 2: eine Seitenansicht eines Substratträgers mit beidseitigen Ausnehmungen;
- Fig. 3: eine Seitenansicht des in der Figur 1 gezeigten Substratträgers während der Herstellung;
- Fig. 4: die Bearbeitung eines Substrats auf dem in der Figur 1 gezeigten Substratträger;
- Fig. 5: verschiedene Phasen des Ätzverfahrens bei der Herstellung des Substratträgers;
- Fig. 6: den Substratträger nach der Fertigstellung in einer Draufsicht.

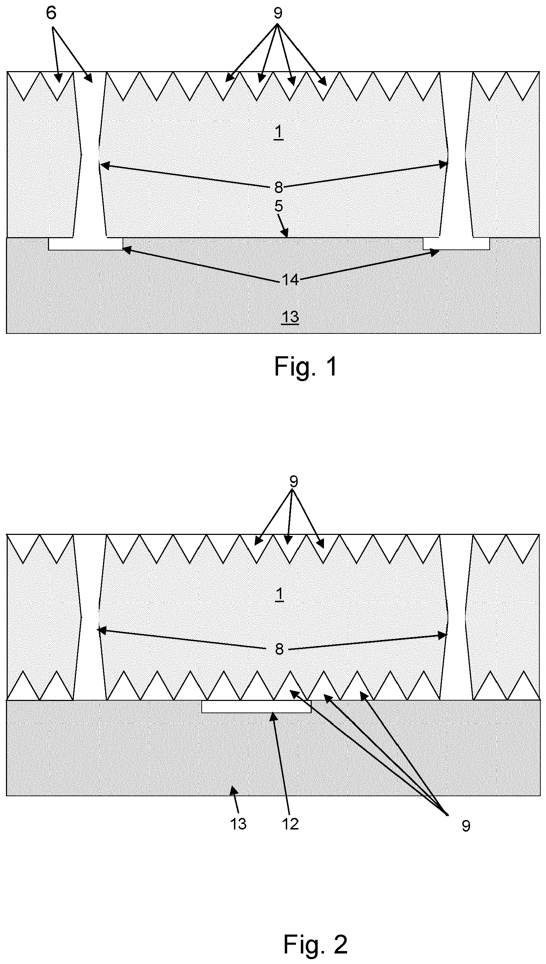

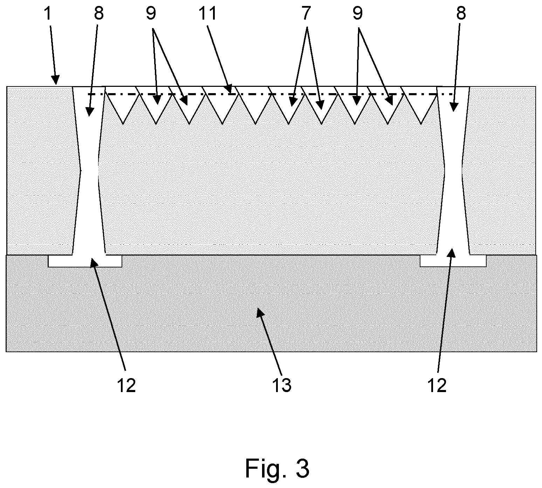

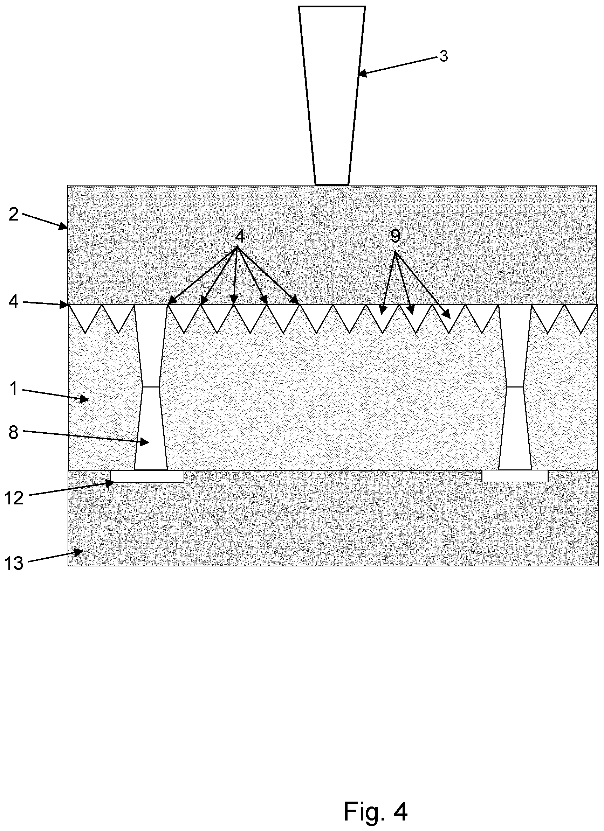

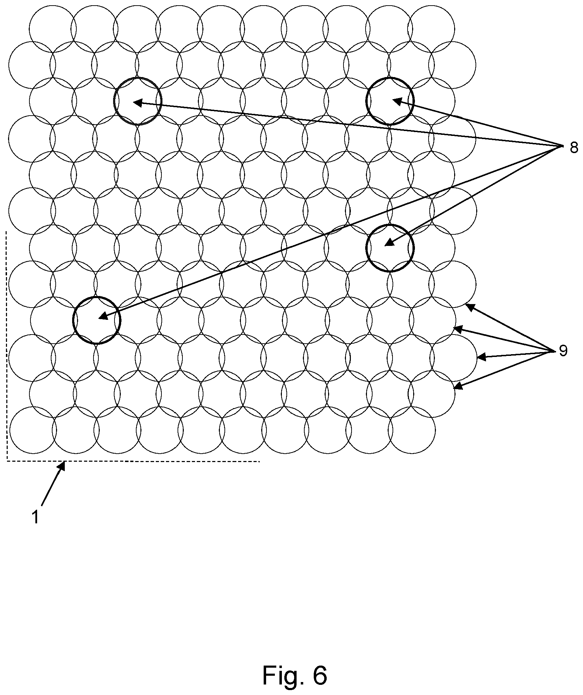

Ein erfindungsgemäßer plattenförmiger Substratträger 1 sowie das Verfahren zu seiner Herstellung werden nachstehend anhand der Figuren 1 bis 6 näher erläutert. Der Substratträger 1 besteht aus einem transparenten Material, insbesondere aus Glas, und dient der Bearbeitung eines insbesondere transparenten oder transmissiven Substrats 2 mittels elektromagnetischer Strahlung 3, beispielsweise eines Lasers, die bei der Bearbeitung des Substrats 2 durch dieses hindurchtritt und daher eine in der Praxis bisher übliche, absorbierende Auflage stark erwärmen oder abtragen würde.

Der Substratträger 1 hat hierzu eine mit einer Substratauflage 4 ausgestattete Oberseite und eine Unterseite 5, wobei gemäß der in der Figur 1 gezeigten Variante lediglich die Substratauflage 4 und gemäß der in der Figur 2 gezeigten Variante die Substratauflage 4 und die Unterseite 5 des Substratträgers 1 jeweils eine Strukturierung 6 aufweist.

Zur Herstellung der Substratauflage 4 und der in der Figur 2 gezeigten strukturierten Unterseite 5 des Substratträgers 1 werden die Strukturierungen 6 durch eine Laserstrahlung eingebracht, indem zunächst unterschiedliche Modifikationen in dem Substratträger 1 erzeugt werden. Durch die Einwirkung eines ätzenden Mediums und durch sukzessives Aufätzen infolge des anisotropen Materialabtrags in dem jeweiligen Bereich der Modifikationen innerhalb des Substratträgers 1 entstehen anschließend konische Ausnehmungen 7. Dabei bilden sich infolge der unterschiedlichen Modifikationen mehrere aneinander angrenzende und/oder ineinander übergehende konische Ausnehmungen 7, die sich entweder als eine Durchgangsöffnung 8 des Substratträgers 1 zwischen der Substratauflage 4 und der Unterseite 5 oder als konische Vertiefungen 9 ohne Durchbrechung des Substratträgers 1 ausbilden.

Benachbarte Ausnehmungen 7 sind dabei lediglich durch eine Wandfläche 10 voneinander getrennt, die sich bis zu der gemeinsamen Ebene 11 der so geschaffenen punktförmigen Substratauflage 4 erstreckt. Hierzu wird der Ätzprozess gestoppt, wenn die Oberfläche bzw. die Wandfläche 10 nur noch aus Spitzen besteht, die zumindest näherungsweise in einer gemeinsamen Ebene vorzugsweise entsprechend der ursprünglichen Glasoberfläche liegen.

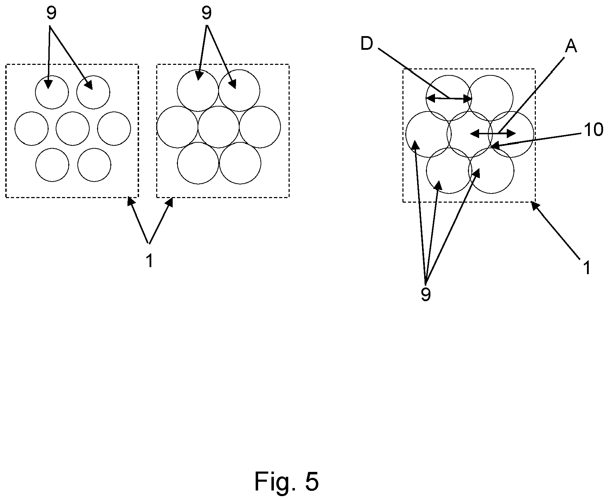

Wie in der Figur 5 zu erkennen, entstehen bei dem Ätzprozess die Ausnehmungen 7 zunächst als kegelförmige Vertiefungen 9 ohne Durchgangsöffnung 8. Der Ätzprozess wird anschließend fortgesetzt, bis die Stärke der Wandflächen 10 auf ein Minimum reduziert ist und eine derart geringe Stärke aufweisen, dass Bereiche parallel zu einer Haupterstreckungsebene des aufliegenden Substrats 2 bzw. orthogonal zu der einfallenden elektromagnetischen Strahlung 3 zumindest weitgehend abgetragen sind. Dadurch entsteht zugleich eine bei aufliegendem Substrat 2 durchströmbare Verbindung benachbarter Ausnehmungen 7, die ein flächiges Ansaugen des aufliegenden Substrats 2 und dessen Fixierung durch Unterdruck ermöglichen. Der Durchmesser D der Ausnehmungen 7 beträgt in der beispielhaft gezeigten Variante ca. 30 µm bis 150 µm und der Abstand A der Ausnehmungen 7 gemessen zwischen den jeweiligen Mittelpunkten der Ausnehmungen 7 ca. 20 µm bis 140 µm, wobei der Abstand A geringer ist als der Durchmesser D. Die Vertiefungen 9 bilden dementsprechend ein verbundenes Volumen.

Bei der in der Figur 2 gezeigten Variante sind mehrere Vertiefungen 9 mit jeweils einer als Durchgangsöffnung 8 ausgeführten Ausnehmung 7 durchströmbar und dadurch strömungsleitend miteinander verbunden. Mehreren Vertiefungen 9 ist eine Absaug- und/oder Vakuumöffnung 12 einer Absaugung 14 in einer Unterlage 13 zugeordnet, sodass die gewünschte Absaugung durch die Vertiefungen 9 und die Durchgangsöffnung 8 hindurch erfolgen kann. Eine genaue Positionierung der Durchgangsöffnung 8 korrespondierend zu der Absaug- und/oder Vakuumöffnung 12 ist hingegen entbehrlich, sodass im Gebrauch der damit verbundene Aufwand entfällt.

### BEZUGSZEICHENLISTE

- 1: Substratträger
- 2: Substrat
- 3: elektromagnetische Strahlung
- 4: Substratauflage
- 5: Unterseite

- 6: Strukturierung
- 7: Ausnehmung
- 8: Durchgangsöffnung
- 9: Vertiefung
- 10: Wandfläche

- 11: Ebene
- 12: Absaugöffnung
- 13: Unterlage
- 14: Absaugung
- D: Durchmesser
- A: Abstand

## Patentansprüche

1. Substratträger (1) aus Glas zur Bearbeitung eines insbesondere transparenten oder transmissiven Substrats (2) mittels elektromagnetischer Strahlung (3), mit einer ersten als Substratauflage (4) dienenden Oberseite und einer dieser abgewandten Unterseite (5), wobei die Substratauflage (4) und/oder die Unterseite (5) des Substratträgers (1) eine Strukturierung (6) aufweist, hergestellt durch Modifikationen in dem Substratträger (1) und einen Materialabtrag durch die Einwirkung eines ätzenden Mediums in dem jeweiligen Bereich der Modifikationen in dem Substratträger (1), wobei die Strukturierung (6) mehrere aneinander angrenzende und/oder ineinander übergehende konische Ausnehmungen (7) aufweist, und wobei zumindest eine Ausnehmung (7) als eine Durchgangsöffnung (8) des Substratträgers (1) zwischen der Substratauflage (4) und der Unterseite (5) und mehrere konischer Ausnehmungen (7) als Vertiefungen (9) ausgeführt sind.

2. Substratträger (1) nach Anspruch 1, **dadurch gekennzeichnet, dass** benachbarte Ausnehmungen (7) durch eine gemeinsame Wandfläche (10) voneinander getrennt sind, wobei sich zumindest ein wesentlicher Anteil der Wandfläche (10) bis zu der gemeinsamen Ebene (11) der Substratauflage (4) erstreckt und so eine partielle und/oder punktförmige Substratauflage (4) entsteht.

3. Substratträger (1) nach Anspruch 1 oder 2, **dadurch gekennzeichnet, dass** die Kontaktfläche der Substratauflage (4) mit dem Substrat (2) weniger als 1 % der durch die Umfangskontur begrenzten Flächen bzw. der projizierten Fläche der Substratauflage (4) beträgt.

4. Substratträger (1) nach zumindest einem der vorhergehenden Ansprüche, **dadurch gekennzeichnet, dass** zumindest einzelne als Vertiefungen (9) mit zumindest einer als Durchgangsöffnung (8) ausgeführte Ausnehmung (7) bei aufliegendem Substrat (2) strömungsleitend oder durchströmbar miteinander verbunden sind.

5. Substratträger (1) nach zumindest einem der vorhergehenden Ansprüche, **dadurch gekennzeichnet, dass** die als Vertiefungen (9) und die als Durchgangsöffnung (8) ausgeführten Ausnehmungen (7) in einem gemeinsamen Ätzverfahren bei übereinstimmenden Ätzbedingungen aufgrund verschiedener Modifikationen hergestellt sind.

6. Substratträger (1) nach zumindest einem der vorhergehenden Ansprüche, **dadurch gekennzeichnet, dass** die verschiedenen Modifikationen infolge unterschiedlicher Fokussierung, Pulsenergie und/oder Leistung einer hierzu eingesetzten Laserstrahlung hergestellt sind.

7. Substratträger (1) nach zumindest einem der vorhergehenden Ansprüche, **dadurch gekennzeichnet, dass** die als Vertiefungen (9) und die als Durchgangsöffnung (8) ausgeführten Ausnehmungen (7) in der Ebene der Substratauflage (4) eine übereinstimmende Größe, Fläche und/oder Geometrie aufweisen.

8. Substratträger (1) nach zumindest einem der vorhergehenden Ansprüche, **dadurch gekennzeichnet, dass** die Wandflächen (10) durch den Materialabtrag der Ätzbehandlung eine derart geringe Stärke aufweisen, dass Bereiche mit einer Flächennormale senkrecht zu der Ebene der Substratauflage (4) zumindest weitgehend ausgeschlossen sind.

9. Substratträger (1) nach zumindest einem der vorhergehenden Ansprüche, **dadurch gekennzeichnet, dass** die als Vertiefungen (9) ausgeführten konischen Ausnehmungen (7) einen Öffnungswinkel von mehr als 30°, insbesondere zwischen 50° und 70°, und die als Durchgangsöffnung (8) ausgeführten konischen Ausnehmungen (7) einen Öffnungswinkel von weniger als 30° aufweisen.

10. Substratträger (1) nach zumindest einem der vorhergehenden Ansprüche, **dadurch gekennzeichnet, dass** die Substratauflage (4) zumindest abschnittsweise eine für die elektromagnetische Strahlung (3) transparente oder transmissive, insbesondere durch Abscheiden auf dem Substratträger (1) erzeugte Oberfläche mit einer elektrischen Leitfähigkeit aufweist.

11. Substratträger (1) nach zumindest einem der vorhergehenden Ansprüche, **dadurch gekennzeichnet, dass** die Unterseite (5) des Substratträgers (1) eine Strukturierung (6) mit insbesondere konischen Vertiefungen (9) zur strömungsleitenden Verbindung einer Absaug- und/oder Vakuumöffnung (12) mit zumindest einer als Durchgangsöffnung (8) ausgeführten Ausnehmung (7) aufweist.

12. Rohling aus Glas zur Herstellung eines Substratträgers (1) nach zumindest einem der vorhergehenden Ansprüche, **gekennzeichnet durch** unterschiedliche Modifikationen sowohl für mehrere als Vertiefungen (9) als auch zumindest eine als Durchgangsöffnung (8) ausgeführte Ausnehmungen (7) , wobei die Modifikationen so eingestellt sind, dass in einer vorbestimmten Ebene parallel zu einer Unterseite des Rohlings aufgrund einer Ätzbehandlung mit übereinstimmenden Parametern insbesondere in einem gemeinsamen Ätzbad Ausnehmungen (7) derselben Größe, Form und/oder Geometrie aller Ausnehmungen (7) herstellbar sind.

13. Eine mit einem Substratträger (1) nach zumindest einem der vorhergehenden Ansprüche ausgestattete Vorrichtung zur Behandlung und/oder Bearbeitung eines Substrats (2) mittels elektromagnetischer Strahlung (3), wobei der Substratträger (1) mehrere einerseits als Vertiefungen (9) und anderseits als Durchgangsöffnung (8) ausgeführte konische Ausnehmungen (7) aufweist, wobei den Ausnehmungen (7) eine Absaugung und/oder Unterdruckquelle zugeordnet ist.

14. Verfahren zur Herstellung eines plattenförmigen Substratträgers (1) mit einer ersten als Substratauflage (4) dienenden Oberseite und einer dieser abgewandten Unterseite (5), wobei die Substratauflage (4) und/oder die Unterseite (5) des Substratträgers (1) Strukturierungen (6) durch Laserstrahlung entlang der Strahlachse unterschiedliche Modifikationen in dem Substratträger (1) und anschließend konische Ausnehmungen (7) durch die Einwirkung eines ätzenden Mediums und durch sukzessives Aufätzen infolge des anisotropen Materialabtrags in dem jeweiligen Bereich der Modifikationen in dem Substratträger (1) erzeugt werden, wobei durch die unterschiedlichen Modifikationen mehrere aneinander angrenzend und/oder ineinander übergehende konische Ausnehmungen (7) mit zumindest einer Ausnehmung (7) als eine Durchgangsöffnung (8) des Substratträgers (1) zwischen der Substratauflage (4) und der Unterseite (5) und mehrere konische Ausnehmungen (7) aus Vertiefungen (9) ohne Durchbrechungen erzeugt werden.

15. Verfahren nach Anspruch 14, **dadurch gekennzeichnet, dass** die als Vertiefungen (9) und die als Durchgangsöffnung (8) ausgeführten Ausnehmungen (7) in einem gemeinsamen Ätzverfahren bei übereinstimmenden Ätzbedingungen aufgrund verschiedener Modifikationen infolge der Laserstrahlung mit unterschiedlicher Fokussierung, Pulsenergie und/oder Leistung erzeugt werden.

16. Verfahren nach Anspruch 14 oder 15, **dadurch gekennzeichnet, dass** die als Vertiefungen (9) ausgeführten Ausnehmungen (7) mit einer geringeren Leistung und/oder Pulsenergie der Laserstrahlung als die als Durchgangsöffnung (8) ausgeführte Ausnehmung (7) modifiziert werden.

17. Verfahren nach zumindest einem der Ansprüche 14 bis 16, **dadurch gekennzeichnet, dass** verschiedene Modifikationen derart erzeugt werden, dass bei der Durchführung der Ätzbehandlung zugleich die Ausnehmungen (7) aufgeweitet werden bis benachbarte Ausnehmungen (7) lediglich durch eine Wandfläche (10) sehr geringer Stärke voneinander getrennt sind und die die Durchgangsöffnung (8) bildenden Ausnehmungen (7) sich zwischen der Substratauflage (4) und der Unterseite (5) erstrecken.

## Geänderte Patentansprüche

### Geänderte Patentansprüche gemäss Regel 137(2) EPÜ.

1. Substratträger (1) aus Glas zur Bearbeitung eines insbesondere transparenten oder transmissiven Substrats (2) mittels elektromagnetischer Strahlung (3), mit einer ersten als Substratauflage (4) dienenden Oberseite und einer dieser abgewandten Unterseite (5), wobei die Substratauflage (4) und/oder die Unterseite (5) des Substratträgers (1) eine Strukturierung (6) aufweist, hergestellt durch Modifikationen in dem Substratträger (1) und einen Materialabtrag durch die Einwirkung eines ätzenden Mediums in dem jeweiligen Bereich der Modifikationen in dem Substratträger (1), wobei die Strukturierung (6) mehrere aneinander angrenzende und/oder ineinander übergehende konische Ausnehmungen (7) aufweist, und wobei zumindest eine Ausnehmung (7) als eine Durchgangsöffnung (8) des Substratträgers (1) zwischen der Substratauflage (4) und der Unterseite (5) und mehrere konischer Ausnehmungen (7) als Vertiefungen (9) ausgeführt sind, wobei zumindest einzelne als Vertiefungen (9) mit zumindest einer als Durchgangsöffnung (8) ausgeführte Ausnehmungen (7) bei aufliegendem Substrat (2) strömungsleitend oder durchströmbar miteinander verbunden sind.

2. Substratträger (1) nach Anspruch 1, **dadurch gekennzeichnet, dass** benachbarte Ausnehmungen (7) durch eine gemeinsame Wandfläche (10) voneinander getrennt sind, wobei sich zumindest ein wesentlicher Anteil der Wandfläche (10) bis zu der gemeinsamen Ebene (11) der Substratauflage (4) erstreckt und so eine partielle und/oder punktförmige Substratauflage (4) entsteht.

3. Substratträger (1) nach Anspruch 1 oder 2, **dadurch gekennzeichnet, dass** die Kontaktfläche der Substratauflage (4) mit dem Substrat (2) weniger als 1 % der durch die Umfangskontur begrenzten Flächen bzw. der projizierten Fläche der Substratauflage (4) beträgt.

4. Substratträger (1) nach zumindest einem der vorhergehenden Ansprüche, **dadurch gekennzeichnet, dass** die als Vertiefungen (9) und die als Durchgangsöffnung (8) ausgeführten Ausnehmungen (7) in einem gemeinsamen Ätzverfahren bei übereinstimmenden Ätzbedingungen aufgrund verschiedener Modifikationen hergestellt sind.

5. Substratträger (1) nach zumindest einem der vorhergehenden Ansprüche, **dadurch gekennzeichnet, dass** die verschiedenen Modifikationen infolge unterschiedlicher Fokussierung, Pulsenergie und/oder Leistung einer hierzu eingesetzten Laserstrahlung hergestellt sind.

6. Substratträger (1) nach zumindest einem der vorhergehenden Ansprüche, **dadurch gekennzeichnet, dass** die als Vertiefungen (9) und die als Durchgangsöffnung (8) ausgeführten Ausnehmungen (7) in der Ebene der Substratauflage (4) eine übereinstimmende Größe, Fläche und/oder Geometrie aufweisen.

7. Substratträger (1) nach zumindest einem der vorhergehenden Ansprüche, **dadurch gekennzeichnet, dass** die Wandflächen (10) durch den Materialabtrag der Ätzbehandlung eine derart geringe Stärke aufweisen, dass Bereiche mit einer Flächennormale senkrecht zu der Ebene der Substratauflage (4) zumindest weitgehend ausgeschlossen sind.

8. Substratträger (1) nach zumindest einem der vorhergehenden Ansprüche, **dadurch gekennzeichnet, dass** die als Vertiefungen (9) ausgeführten konischen Ausnehmungen (7) einen Öffnungswinkel von mehr als 30°, insbesondere zwischen 50° und 70°, und die als Durchgangsöffnung (8) ausgeführten konischen Ausnehmungen (7) einen Öffnungswinkel von weniger als 30° aufweisen.

9. Substratträger (1) nach zumindest einem der vorhergehenden Ansprüche, **dadurch gekennzeichnet, dass** die Substratauflage (4) zumindest abschnittsweise eine für die elektromagnetische Strahlung (3) transparente oder transmissive, insbesondere durch Abscheiden auf dem Substratträger (1) erzeugte Oberfläche mit einer elektrischen Leitfähigkeit aufweist.

10. Substratträger (1) nach zumindest einem der vorhergehenden Ansprüche, **dadurch gekennzeichnet, dass** die Unterseite (5) des Substratträgers (1) eine Strukturierung (6) mit insbesondere konischen Vertiefungen (9) zur strömungsleitenden Verbindung einer Absaug- und/oder Vakuumöffnung (12) mit zumindest einer als Durchgangsöffnung (8) ausgeführten Ausnehmung (7) aufweist.

11. Rohling aus Glas zur Herstellung eines Substratträgers (1) nach zumindest einem der vorhergehenden Ansprüche, **gekennzeichnet durch** unterschiedliche Modifikationen sowohl für mehrere als Vertiefungen (9) als auch zumindest eine als Durchgangsöffnung (8) ausgeführte Ausnehmungen (7) , wobei die Modifikationen so eingestellt sind, dass in einer vorbestimmten Ebene parallel zu einer Unterseite des Rohlings aufgrund einer Ätzbehandlung mit übereinstimmenden Parametern insbesondere in einem gemeinsamen Ätzbad Ausnehmungen (7) derselben Größe, Form und/oder Geometrie aller Ausnehmungen (7) herstellbar sind.

12. Eine mit einem Substratträger (1) nach zumindest einem der vorhergehenden Ansprüche ausgestattete Vorrichtung zur Behandlung und/oder Bearbeitung eines Substrats (2) mittels elektromagnetischer Strahlung (3), wobei der Substratträger (1) mehrere einerseits als Vertiefungen (9) und anderseits als Durchgangsöffnung (8) ausgeführte konische Ausnehmungen (7) aufweist, wobei den Ausnehmungen (7) eine Absaugung und/oder Unterdruckquelle zugeordnet ist.

13. Verfahren zur Herstellung eines plattenförmigen Substratträgers (1) nach zumindest einem der Ansprüche 1 bis 10 mit einer ersten als Substratauflage (4) dienenden Oberseite und einer dieser abgewandten Unterseite (5), wobei die Substratauflage (4) und/oder die Unterseite (5) des Substratträgers (1) Strukturierungen (6) durch Laserstrahlung entlang der Strahlachse unterschiedliche Modifikationen in dem Substratträger (1) und anschließend konische Ausnehmungen (7) durch die Einwirkung eines ätzenden Mediums und durch sukzessives Aufätzen infolge des anisotropen Materialabtrags in dem jeweiligen Bereich der Modifikationen in dem Substratträger (1) erzeugt werden, wobei durch die unterschiedlichen Modifikationen mehrere aneinander angrenzend und/oder ineinander übergehende konische Ausnehmungen (7) mit zumindest einer Ausnehmung (7) als eine Durchgangsöffnung (8) des Substratträgers (1) zwischen der Substratauflage (4) und der Unterseite (5) und mehrere konische Ausnehmungen (7) aus Vertiefungen (9) ohne Durchbrechungen erzeugt werden.

14. Verfahren nach Anspruch 13, **dadurch gekennzeichnet, dass** die als Vertiefungen (9) und die als Durchgangsöffnung (8) ausgeführten Ausnehmungen (7) in einem gemeinsamen Ätzverfahren bei übereinstimmenden Ätzbedingungen aufgrund verschiedener Modifikationen infolge der Laserstrahlung mit unterschiedlicher Fokussierung, Pulsenergie und/oder Leistung erzeugt werden.

15. Verfahren nach Anspruch 13 oder 14, **dadurch gekennzeichnet, dass** die als Vertiefungen (9) ausgeführten Ausnehmungen (7) mit einer geringeren Leistung und/oder Pulsenergie der Laserstrahlung als die als Durchgangsöffnung (8) ausgeführte Ausnehmung (7) modifiziert werden.

16. Verfahren nach zumindest einem der Ansprüche 13 bis 15, **dadurch gekennzeichnet, dass** verschiedene Modifikationen derart erzeugt werden, dass bei der Durchführung der Ätzbehandlung zugleich die Ausnehmungen (7) aufgeweitet werden bis benachbarte Ausnehmungen (7) lediglich durch eine Wandfläche (10) sehr geringer Stärke voneinander getrennt sind und die die Durchgangsöffnung (8) bildenden Ausnehmungen (7) sich zwischen der Substratauflage (4) und der Unterseite (5) erstrecken.
